# EUROPEAN PATENT SPECIFICATION

(11) **EP 1 703 421 B1**
(45) Date of publication and mention of the grant of the patent: **08.10.2008**
(21) Application number: 06111024.3
(22) Date of filing: 13.03.2006
(51) Int. Cl.: G06F 17/30

(54) **Document management system**
Dokumentverwaltungssystem
Système de gestion de documents

(30) Priority: 15.03.2005 EP 05102042
(43) Date of publication of application: 20.09.2006
(73) Proprietor: Océ-Technologies B.V., 5914 CC Venlo (NL)
(72) Inventor: Collard, René F.A., 6591 TT, Gennep (NL); Weyers, Robert, 5706 HC, Helmond (NL); Bilderbeek, Manuel, 6535 TK, Nijmegen (NL); Mullender, Matthijs F., 5912 SC, Venlo (NL); Brand, Roeland K., 5706 DK, Helmond (NL); Willems, Teun K.J., 5665 CR, Geldrop (NL); Martin, Igor L.H., 5621 CR, Eindhoven (NL)
(74) Representative: van Meeteren, Arend Anthonie

(56) References cited:
- WO-A-99/49388
- US-A1- 2004 049 445
- US-A1- 2004 186 852
- US-A1- 2004 215 552
- US-A1- 2004 267 595

## Description

The invention generally relates to document management systems and, more in particular, to a computerised administrative file handling system comprising:
at least one user workstation, a scanner for scanning and digitizing documents, a printer for printing digital documents and a file managing module, including a file storage facility, for managing a plurality of administrative files of various different categories, stored in the file storage facility, the file managing module being adapted to facilitate amending the stored files, such as by putting therein one or more digital documents of various different natures.

### BACKGROUND OF THE INVENTION

A prime, but not limiting, example of a method as recited above is local government, such as when it is involved in the issuing of a broad variety of licenses. It has been found that in such environments, the number of different documents in a file is often limited, and usually, each possible document in the file has been specified beforehand. However, for a particular type of file the instants and sequence of the entering of the documents is quite variable and often unpredictable. Also, for each type of file there may be many individual instances that do not have to be processed in a fixed sequence. Furthermore there are often as many as several hundreds of different types of file, which each need a different set of documents. Furthermore, for a particular type of file not always all specified documents are necessary, such as when a particular document would imply a rejection that would render superfluous the collecting of further documents. Moreover, often a particular file should be open to being processed by various different persons or departments.

Prior art has recognized the importance of correct management, but the necessity for steady improvement is pertinent, such as being driven by faster procedures, tight timetables, the legal obligation to allow public inspection of various files, and the general requirement for optimum quality.

For instance, Patent Publication US 2004/0179224 A1 to Kidokoro discloses an image processing apparatus and method suitable for inputting and outputting documents in a document repository. However, the reference does not relate to the managing of various different files and including a multiplicity of documents an as overall target.

Also, several elaborated digital document management systems with built-in workflows for complicated procedures have been proposed. While providing a great versatility in application, such systems often require a high degree of training and adaptation of the clerks, who have often been working with hard copy files for many years.

For instance, US 2004/0267595 A1 discloses an extremely elaborated management system for workers, jobs and support. So-called binders can be used for putting therein all kinds of related documents. Binders may have a pre-structured content and tick boxes are used for showing presence/non-presence of documents. Documents may be entered by scanning, and a bar code describing the exact nature of the document may be applied to the document and scanned along with it. Alternatively, a document may be scanned with a bar code that only identifies the binder, whereupon the the operator must place the document at the right place in the binder, using the computer interface.

US 2004/049445 A1 discloses a workflow system for financial transctions, more in particular real estate and mortgage. For each transaction, the system automatically generates a pre-structured set of documents that must be added or updated, and a tracking module in the system checks the progress. The file handling, however, is completely electronic.

### SUMMARY OF THE INVENTION

In consequence, amongst other things, it is an object of the present invention to allow the above recited managing simple and fast, whilst still accommodating a wide variety of file categories, complexities, processing periods and other parameters.

It is also an object of the present invention to provide a method of managing dossiers related to administrative procedures that as much as possible fits to the experience of the people handling it, and does not impose additional system-related working rules unless absolutely necessary.

Moreover, the avoidance of errors should have a high priority.

Now therefore, according to one of its aspects, the invention provides a computerised administrative file handling system as specified in claim 1.

Through representing a file by its content form, further also called "front page" or "header page", that represents both actual and intended contents thereof, a present state of processing is rendered immediately visible. When a document is added or, as the case may be, suppressed, the corresponding entry on the front page is amended. An additional advantage hereof is, that this way of presenting the contents of the file closely resembles a conventional hard copy file, wherein the file contents can also readily be inspected. And, just like in a hard copy file, documents may in principle be entered at will.

Advantageously, the amending is furthermore signalled in the list by a presentation of any of an amending instant and an amending person or department. This allows to immediately ascertain the state of that document, and possibly, to see what must be done next with the file. The term "department is herein intended to cover any applicable group of persons, authority, firm or other legal or factual organization.

In an embodiment of the present invention, the method includes allowing transferring a file from one entity handling it, to an other entity. In this connection, an entity is meant to be a person or a department. Such transfer may be effected through communicating one or more applicable links pertaining to that file as stored in the file storage facility, without necessitating transfer of the complete file. Such communicating would advantageously be in the form of an e-mail including said link.

Transferring a file to another entity may be done for adding information or the like, without also transferring the ownership, that is, the responsibilty over the file, but it may also be done with transfer of ownership, when the receiving party must indeed take over the responsibilty of the further administrative procedure. In the latter case, the actual transfer may for instance be done in the same way as in the former case, that is, by e-mailing a link to the file.

In a further embodiment, entering of a document into a file is effected through either scanning and digitizing, or direct entering of a digital document, and the method further includes comparing a current list of entered documents in said file with a list amended by an entity handling the file in association with entering a document, and automatically updating the file content accordingly.

Thus, through comparing of successive versions of the front page, the system embodying the present invention may determine which documents are added, amended, or suppressed, and can then update the file to reflect the new situation.

Further advantageous aspects of the invention are recited in dependent Claims.

### BRIEF DESCRIPTION OF THE DRAWING

These and further features, aspects and advantages of the invention will be discussed more in detail hereinafter with reference to the disclosure of preferred embodiments of the invention, and in particular with reference to the appended Figures that illustrate:
Figure 1, a technical set-up of a Documentary Dossier System according to the present invention;
Figure 2, a typical example of a work flow in a document management procedure according to the invention;
Figure 3, a scheme of a file amending procedure;
Figure 4, an exemplary Document Header Page for use in the invention with all textuals inserted.

### DETAILED DESCRIPTION OF PREFERRED EMBODIMENTS

The present invention is primarily intended for administrative organisations, such as local government, in which administrative procedures such as the issuing of licenses are executed. Such procedures are generally started by reception of a request or other communication from an external person or entity, further called: customer. The actual administrative procedure that follows is often characterized by collecting information and storing the same in a dossier or file.

When all required information has been collected (included in the file), a decision is taken and/or a response is given to the customer, whereafter the file is closed and archived. In many procedures as contemplated in the present invention, the file structure is fixed, i.e. it is known beforehand which documents must be entered or at least may be entered in the file before the case can be closed.

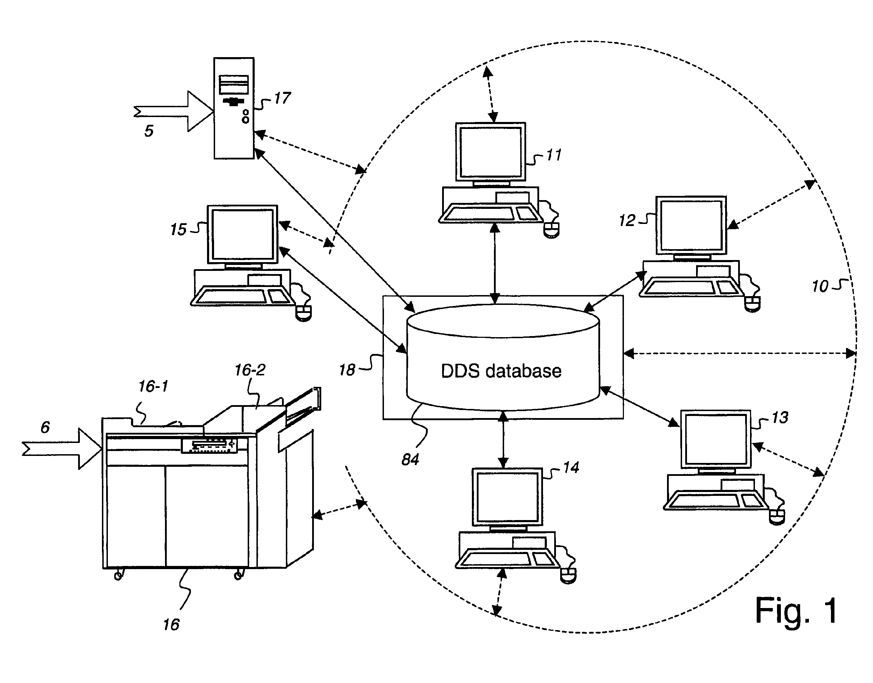

Figure 1 illustrates the technical set-up of a so-called Documentary Dossier System (DDS) implementing the present invention that is particularly suitable for supporting the above-described administrative procedures. Shown are user workstations 11, 12 13, 14 and 15, a server 17 for external connections, a multifunctional device 16 including a scanner section 16-1 and a printer section 16-2, a file manager 18 including a database 84 and a digital network 10 connecting them (shown by broken lines). The workstations and the server may store and retrieve data files in the database 84, and file transfer is symbolized by non-broken arrows. The file manager 18 also includes a user interface engine (not shown), preferably in the form of a web server for communication with web browsers installed in the respective workstations. The database stores all document files that are needed or generated in the course of the various administrative procedures. The reception of the said request or other communication from a customer is symbolized by arrows 5 (digital reception) and 6 (reception by mail, which is scanned by the mailroom personnel using scanner 16-1 to convert it to digital form).

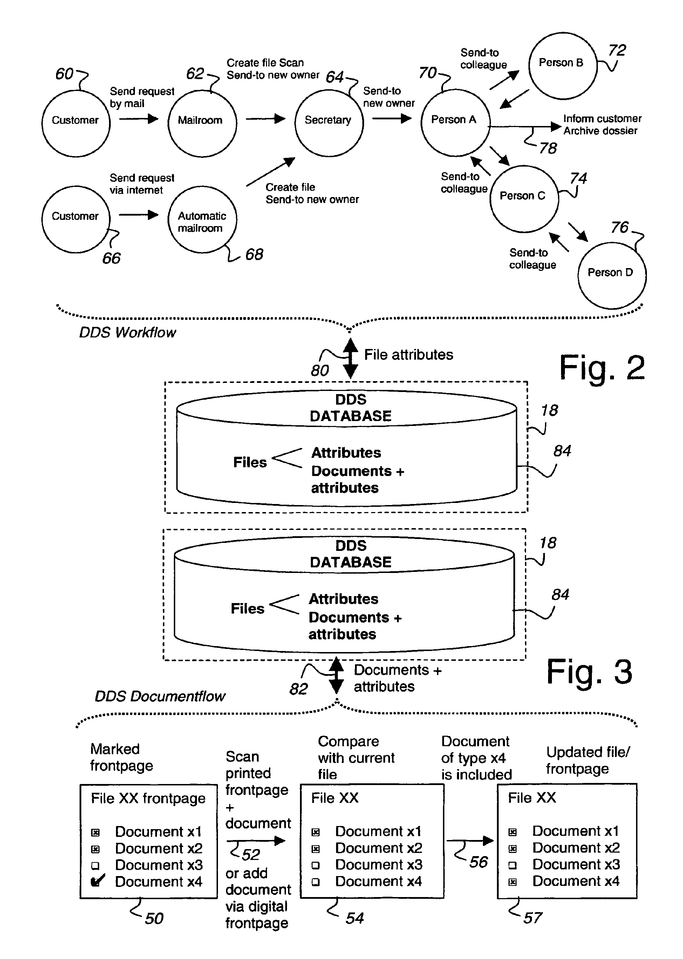

Figure 2 is typical example of a work flow in a document management procedure and a scheme of a file updating procedure according to the invention, also called: the DDS Workflow. Now first, customer 60 sends a request by mail, which is received in mail-room 62; next, a dedicated file is created in the database 84 by the file manager 18, the request document proper is scanned and stored in the file, and an e-mail including a link to the file is sent to a new owner, who is secretary person 64. File particulars, such as the name and address of the customer, the kind of request and possibly some more detailed information, may be automatically detected in the scanning step by OCR (optical character recognition) and other appropriate software applications, and added to the new file, preferably after a check by an operator. Alternatively, the mail operator may visually inspect the request and add the file particulars himself.

Likewise, customer 66 may send a request by Internet, such as by email, which is received in automatic mailroom 68, implemented in server 17 (Fig. 1). Also here, a file is created using the file manager 18 and the request stored therein, possibly together with manually or automatically detected file particulars, and an e-mail including a link to the file is sent to the new owner, who is secretary 64. Obviously, in this case the request proper needs no scanning. It is noted here that the file as created is pre-structured, i.e. it already contains entries for all documents that must be entered before the case can be finished, as is explained above.

Secretary 64 selects a new owner for attending to the request, clerk 70, by sending an e-mail including a link to the file. Alternatively, the request may only be entered in the database without creating a file upon reception, and secretary 64 may create the file.

Clerk 70 may signal colleagues 72, 74, 76 by exchanging e-mails to execute certain tasks with regard to the file in question. "Done" reciprocating e-mails signal various progress in the handling of the file. Ultimately, clerk A may inform the customer and/or order archiving (78) the file in question.

The above DDS Workflow is related to the file stored in the DDS Database 84 and managed by the file manager 18 by the various file attributes stored therein, as is symbolized by arrow 80. The database 84 stores the files, that as indicated contain Attributes proper, and furthermore, the associated documents also provided with their particular attributes. Examples of the latter are further explained with reference to Fig. 3, where they are shown connected through arrow 82 with the DDS Document flow.

Figure 3 illustrates an exemplary scheme of a file updating procedure. A basic element of the procedure is a file front page that includes in a human-readable form the actual and intended contents of the file. The front page plays a central role in the file handling for the clerks involved.

At left in Figure 3, a marked front page (50) of file XX is shown. As shown, file XX is pre-structured to contain four documents x1, x2, x3 and x4, of which two (x1, x2) are already included (shown by a cross in the associated tick box). One (x4) has been targeted for entering (shown by a tick mark drawn by the operator in the associated tick box), and one (x3) is still void.

Next, this front page and the document to be inserted are scanned (52) and the scanned image of the front page is automatically compared with the current version of the file (54) in the database. For simplicity, the scanning proper has not been indicated in Figure 3. The system automatically recognizes the discrepancy of the signalization in respect of Document x4 and accordingly, the file manager 18 adds the scanned document to the file in question (56) under the relevant name and stores the document file itself in the database 84. If the front page would now be recalled, it would have a correspondingly amended form, as shown at the right-hand side of Figure 3 (57).

Alternatively, a document that is in digital form already, e.g. an edited document file, may directly be entered into the file using a digital user interface as will be described hereinafter.

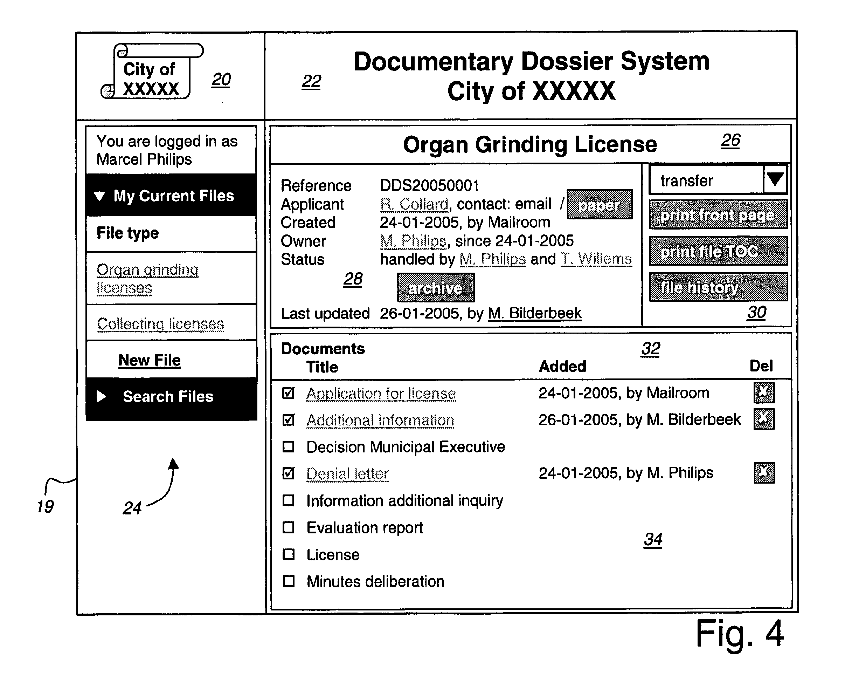

Figure 4 illustrates an exemplary user interface display image by which the respective workstations 11, 12, 13, 14, 15 may communicate with the file manager 18 as shown in Figure 1. The display image includes a Document Header Page 19 generated by the web server in the database and displayed on the screens of the workstations. First, the reference numerals are indicated for a quick discussion of the document. The top field 20 gives the municipal symbol, field 22 is directed to reciting the user administration, in this example called: the City of XXXX. Field 24 gives the current user person, a list of currently "open" files, a file creation button, and a file search button. Field 26 identifies the class of the currently opened file ("Organ grinding License"). Field 28 further specifies the file as will be discussed more in detail hereinafter. Field 30 contains a drop-down menu box for transferring of the file to a new owner, for transmitting it to a colleague or for returning it to sender. Further, field 30 contains various control buttons, such as for printing an (updated) front page, for printing a file overview (Table of Contents (TOC)) and for displaying the file history.

When a file TOC is ordered, a page is printed showing the first pages of the available documents as thumbnails. Each thumbnail has a tick box added to it and the user may check one or more of the tick boxes and feed the page into a scanner. Then, the system automatically determines which ones of the boxes was checked and prints the complete associated documents.

Field 32 is a header for the document identifiers therebelow. Field 34 contains a pre-programmed list of particular documents that can be relevant to the file in question and which therefore may be present in the file. Such lists are predefined for each respective type of file and automatically appear upon creation of a new file. The series of fields is generally limited, and each field relates to a particular document. Nevertheless, in certain cases a supplementary field may be present, without any particular assignment given thereto for documents that are unforeseen.

Now, the various textuals associated to the example page will be recited. In particular, field 24 has on successive lines the name of the actual user person ("Marcel Philips"), a header indicating all open files ("My Current Files") (they are actually shown as the available display may accommodate, but other open files may be hidden from view whilst being accessible immediately), a header indicating by "File type", the type(s) of various such file(s). Each file type may be clicked on and then opens to show a list of current files of that type, i.e. in the exemplary case of "Organ grinding licenses" there may be accommodated several applications of such a license by different customers/applicants. Clicking on one such file results in display of the details of that file in the window formed by the fields 26 through 34.

Further lines in the field 24 are a file creation ("New File") button, and a file search button.

Field 28 has on successive lines the file identifier (DDS20050001), the customer (R. Collard) who has applied for an organ grinding license and an associated communication signalization, such as e-mail or paper. Clicking on the "paper" button automatically opens an editor for drafting a letter to that customer, with all particulars filled in already. Likewise, clicking on the name of the customer automatically opens the email client of the workstation for sending an email to the customer. The next line indicates the data of creating the document, and its original author ("Mailroom"). The next line indicates the current owner (M. Philips), the date of ownership, and a button for archiving the file. Activating the latter button will close the file in question; it may be opened again via field 24, last line. The last line of field 28 indicates the persons actually busy on the file (M. Philips, T. Willems). "Busy" may indicate that the file has been sent to those persons for them to add a document or take some other action. A file is sent in the form of an email specifying a link to the file in the database. The sender may use the email to add some specific remarks relevant for the case.

Field 32 is a header for the document identifiers therebelow and indicates the various document specifiers, in this case title and entering particulars. The field 34 contains the list of documents. The first column is a presence indicator in the form of a tick box. The second column indicates the name or character of the document, and the third column signals the date of entering the document and the author of such entering, respectively, while the last one is a delete button. Generally, the document title in field 34 is "clickable", such that when it is clicked, the document opens on the display screen of the workstation.

The first line of the list represents the basic document (here, the actual application for the license). Further lines identify the various other required documents and signal, by the presence indicator, whether the document in question has been entered or not.

It should be clear from the above that documents may be added to a DDS (Documentary Dossier System) in various different sequences and by any person that has the proper clearing to access the DDS. Thus the work flow is not constant, and can even be assigned to a varying set of persons and/or departments.

A typical example is the following. Person A is the actual owner and adds documents x1 and x3 to the file. The file status is then "handling by A". Next, persons B and C should add documents x2 and x4, respectively. Person A may now select "send to colleague" and thereby, send an e-mail with a link to the digital front page to alert person B. The file alert will be accepted when the receiver clicks on the link in question. In DDS the file status is now changed to "handling by A and B". Still, the DDS knows that A had sent this link. When person B has completed the job, he may select "mail back to sender", and in response the DDS sends an e-mail with the file link to person A. When A accepts this mail by clicking on the link, the status of the file is reverted to "handling by A". Person A may now send the file to person C for adding document x4. It may also be that person B may first send the file to C for adding x4, before he returns the file to A. Accordingly, the file status will then change into "handling by A and C". When C has added document x4, he simply returns the file to sender, i.e., B, and B may return it to A.

For reasons of simplicity and transparency, circular workflows that contain a chain of three or more stages are not allowed, although it is not principally impossible to implement circular chains. This inhibiting is realized through comparing the e-mail addressee with the persons in "handling by". Alternatively to "send to/back to colleague", the file ownership can be similarly changed by sending an e-mail with the file link. Although the above "free" workflow support is fully independent from the actual order wherein the documents are added to the DDS, and also independent from the specific persons that are involved in the DDS, the DDS can in effect be used as a self-learning workflow system by registering and accumulating the actual work-flows. This workflow information may then in turn be used to support the workflow of the persons using DDS, such as by in various procedures prompting the associated correct addressees. Another usage of the workflow information is to provide management information for effecting workflow control.

Generally, the document and workflow management system according to the invention applies for situations wherein the major part of actions is the accumulating of information according to fixed prescriptions and then deciding as based on the available information. This means that in principle, only prescribed documents should be entered into the file. It is not always necessary that all documents be in the file. For example, an appeal against a negative decision will not always be lodged by a customer.

The documents may be entered into the file by either scanning and digitizing or by directly entering digital documents into a website-like structure, of which the front page operates as an automatic table-of-contents.

In document entry through scanning, the steps are:
- printing the front page by clicking the appropriate button in the field 30 of the user interface (Figure 4),
- manual amending the printed front page by placing a sign in the appropriate tick box,
- scanning in succession the amended front page and the document to be entered. The system recognizes the scanned front page, e.g. from a bar code that was automatically added to the front page in the printing stage, compares it with the front page stored in the database and decides therefrom what document is to be added and actually adds the document to the database, possibly after pre-processing such as OCR-ing (optical character recognition).

If a digital document is to be added, the user may simply click the tick box preceding the document name in field 34 of the user interface, whereupon a browse box is opened in the same line of field 34. The user may now specify the intended document in the browse box and upload it to the system.

Further processing is effected by e-mailing not the whole file, but only appropriate links to files. The DDS records the actual workflow pertaining to each file, and this may be inspected by clicking the appropriate button in field 30 of the user interface.

An (external) customer will also have access to DDS to check (but not amend) the status of the customer's file. When a pertinent request is sent digitally, an automatic mailroom will recognize the request, create a new file, and send an e-mail with a link to the secretary of the associated department. The customer may amend preferences regarding to communication media (paper/e-mail/phone) in DDS. In fact, the "free" work flow is independent of the actual documents in the file. Part of the work flow can in fact still be paper-based without relying on e-mail. The important aspect is that the DDS always knows who had added a document to DDS. When done digitally, this is the one who logged on. When done by scanning the marked front page plus the document, DDS will recognize the name of the one who printed the front page, such as by recognizing the name of the person who printed the front page, such as by being represented in a bar code together with the file ID. When a file has been completed, the owner will inform the associated customer, and change the file status to "archived".

Now, the present invention has hereabove been disclosed with reference to preferred embodiments thereof. Persons skilled in the art will recognize that numerous modifications and changes may be made thereto without exceeding the scope of the appended Claims. For example, instead of a two-level file, the structure may be extended by letting certain documents be joined into a sub-file, so that effectively, a tree structure were feasible. Furthermore, cross-referencing among documents could be rendered feasible in the document entries (36, 38). Also, interaction between parties operating on a particular file may be effected by communication protocols that are getting in general usage, such as through what has become known as "instant messaging". Furthermore, the invention has been elucidated with reference to a working environment formed by local government, but that is not to be construed as limiting the application. Any organisation handling pre-structured files would benefit from the present invention.

In consequence, the embodiments discussed should be considered as being illustrative, and no restriction should be construed from those embodiments, other than as have been recited in the Claims.

## Claims

1. A computerised administrative file handling system comprising:
- at least one user workstation (11-15),
- a scanner (16-1) for scanning and digitizing documents,
- a printer (16-2) for printing digital documents and
- a file managing module (18), including a file storage facility (84), for managing a plurality of administrative files of various different categories, stored in the file storage facility (84),
the file managing module (18) being adapted to facilitate amending the stored files, such as by putting therein one or more digital documents of various different natures,
the file managing module (18) being also adapted to:
**--** assign to each applicable file category a pre-structured format, wherein each format accommodates a set of document entries (34), each entry being distinguished according to its predetermined nature;
-- display on a workstation screen for each applicable file a header page (19) including a list (34) specifying an applicable such set of document entries wherein an entry for a document included in the file is marked by a presence indicia;
**characterized in that** the file managing module (18) is further adapted to:
-- print a front page (54, 57), including said list, for a respective file, on the printer(16-2);
-- compare the list in a front page (50) of a respective file, as scanned with the scanner (16-1), with a currently stored list (54) of that file and detect any difference in presence indicia between the two;
-- when a detected difference comprises an added presence indicia, automatically amend the file by putting an equally scanned document in the file in correspondence with the list entry related to the added presence indicia, and updating the list (57).

2. A system according to Claim 1, wherein said file managing module (18) is further adapted to detect manipulation of said list (34) displayed on a workstation screen, and to allow importing or deleting a document in accordance with a detected manipulation.

3. A system according to Claim 1, wherein said file managing module (18) is adapted to maintain metadata for each file, said metadata including a file identifier and any of a creation instant, a creating entity, an owner entity and a currently handling entity, an entity being a person or department.

4. A system according to Claim 3, wherein said file managing module (18) is adapted to allow transferring ownership and/or handlership of a file from one entity to an other entity.

5. A system as claimed in Claim 1, wherein said file managing module (18) is adapted to limit amending a file to a pre-selected set of persons or departments, but wherein file inspection is open to further pre-selected persons or departments outside said pre-selected set.

6. A system as claimed in Claim 1, wherein said file managing module (18) is adapted to, when a handling entity enters a document into a particular file, permanently tag an identifier of said handling entity to said document.

7. A system as claimed in Claim 1, wherein said file managing module (18) is adapted to, upon completion of a file, signal a customer accordingly and/or archive the file in question, whilst therewith suppressing further appearance of such file in a list of current files.

8. A system according to Claim 1, wherein said file managing module (18) is adapted to automatically analyse various particulars of actual workflows involving respective file types and to automatically propose handling steps based on said analysis.

## Patentansprüche

1. Computergestütztes Dateiverwaltungssystem, mit:
- wenigstens einem Arbeitsplatzrechner (11-15) eines Benutzers,
- einem Scanner (16-1) zum Einscannen und Digitalisieren von Dokumenten,
- einem Drucker (16-2) zum Drucken von digitalen Dokumenten und
- einem Dateiverwaltungsmodul (18), einschließlich einer Dateispeichereinrichtung (84), zum Verwalten einer Vielzahl von Verwaltungsdateien etlicher unterschiedlicher Kategorien, die in der Dateispeichereinrichtung (84) gespeichert sind,
wobei das Dateiverwaltungsmodul (18) dazu eingerichtet ist, die Änderung der gespeicherten Dateien zu erleichtern, etwa durch Einfügen eines oder mehrerer digitaler Dokumente verschiedener Art,
wobei das Dateiverwaltungsmodul (18) außerdem dazu eingerichtet ist:
-- jeder anwendbaren Dateikategorie ein vorstrukturiertes Format zu zuweisen, wobei jedes Format einen Satz von Dokumenteinträgen (34) enthält, wobei jeder Eintrag gemäß seiner vorbestimmten Natur unterschieden ist,
-- für jede anwendbare Datei auf einem Bildschirm eines Arbeitsplatzrechners eine Kopfseite (19) anzuzeigen, die eine Liste (34) enthält, die einen solchen anwendbaren Satz von Dokumenteinträgen spezifiziert, wobei ein Eintrag für ein Dokument, das in der Datei enthalten ist, durch eine Anwesenheitsangabe markiert ist,
**dadurch gekennzeichnet, daß** das Dateiverwaltungsmodul (18) weiterhin dazu ausgebildet ist:
-- eine Frontseite (54, 57), die die genannte Liste enthält, für eine betreffende Datei auf dem Drucker (16-2) zu drucken,
-- die Liste auf einer Frontseite (50) einer betreffenden Datei, wie sie mit dem Scanner (16-1) eingescannt wurde, mit einer gegenwärtig gespeicherten Liste (54) dieser Datei zu vergleichen und einen etwaigen Unterschied in der Anwesenheitsangabe zwischen den beiden Listen zu detektieren,
-- wenn eine detektierte Differenz eine hinzugefügte Anwesenheitsangabe enthält, die Datei automatisch zu verändern, indem ein gleichfalls eingescanntes Dokument in Übereinstimmung mit dem Listeneintrag, der sich auf die hinzugefügte Anwesenheitseingabe bezieht, in die Datei aufgenommen wird, und die Liste (57) zu aktualisieren.

2. System nach Anspruch 1, bei dem das Dateiverwaltungsmodul (18) weiterhin dazu eingerichtet ist, eine Manipulation der auf dem Bildschirm eines Arbeitsplatzrechners angezeigten Liste (34) zu detektieren und den Import oder das Löschen eines Dokuments in Übereinstimmung mit der detektierten Manipulation zu erlauben.

3. System nach Anspruch 1, bei dem das Dateiverwaltungsmodul (18) dazu eingerichtet ist, für jede Datei Metadaten zu unterhalten, wobei diese Metadaten eine Dateikennung sowie mindestens eines der folgenden Objekte umfasse: einen Erzeugungszeitpunkt, eine Erzeugungsinstanz, eine Eigentümerinstanz und eine aktuelle Handlungsinstanz, wobei eine Instanz eine Person oder eine Abteilung ist.

4. System nach Anspruch 3, bei dem das Dateiverwaltungsmodul (18) dazu eingerichtet ist, die Übertragung der Eigentümerschaft und/oder der Behandlung einer Datei von einer Instanz auf eine andere Instanz zu erlauben.

5. System nach Anspruch 1, bei dem das Dateiverwaltungsmodul (18) dazu ausgebildet ist, das Ändern einer Datei auf einen vorgewählten Satz von Personen oder Abteilungen zu beschränken, wobei jedoch die Ansicht der Datei weiteren vorgewählten Personen oder Abteilungen außerhalb des vorgewählten Satzes offen steht.

6. System nach Anspruch 1, bei dem das Dateiverwaltungsmodul (18) dazu eingerichtet ist, wenn eine behandelnde Instanz ein Dokument in eine spezielle Datei eingibt, eine Kennung für diese behandelnde Instanz permanent an das Dokument anzuhängen.

7. System nach Anspruch 1, bei dem das Dateiverwaltungsmodul (18) dazu eingerichtet ist, bei Fertigstellung einer Datei einen Kunden entsprechend zu informieren und/oder die Datei zu archivieren, wobei zugleich ein weiteres Auftreten dieser Datei in einer Liste aktueller Dateien unterdrückt wird.

8. System nach Anspruch 1, bei dem das Dateiverwaltungsmodul (18) dazu eingerichtet ist, verschiedene Einzelheiten aktueller Arbeitsabläufe, die die jeweiligen Dateitypen betreffen, automatisch zu analysieren und auf der Grundlage dieser Analyse automatisch Behandlungsschritte vorzuschlagen.

## Revendications

1. Système informatisé de traitement de dossiers administratifs comportant :
- au moins un poste de travail utilisateur (11-15),
- un lecteur optique (16-1) permettant de lire par voie optique et de numériser des documents,
- une imprimante (16-2) permettant d'imprimer des documents numériques, et
- un module de gestion de fichiers (18) contenant un système de stockage de fichiers (84) permettant de gérer une pluralité de fichiers administratifs de diverses catégories différentes, stockés dans le système de stockage de fichiers (84),
le module de gestion de fichiers (18) étant conçu pour faciliter la rectification des fichiers stockés, par exemple en y plaçant un ou plusieurs documents numériques de nature diverse et variée,
le module de gestion de fichiers (18) étant également conçu pour :
-- attribuer un format pré-structuré à chaque catégorie de dossier d'application, dans lequel chaque format peut accueillir un jeu d'entrées de document (34), chaque entrée étant distinguée en fonction de sa nature prédéterminée ;
-- visualiser sur un écran de poste de travail pour chaque dossier d'application une page d'en-tête (19) contenant une liste (34) mentionnant un tel jeu d'application d'entrées de document, dans lequel une entrée pour un document contenu dans le fichier est marquée au moyen d'un indice de présence ;
**caractérisé en ce que** le module de gestion de fichiers (18) est en outre conçu pour :
-- imprimer une page de garde (54, 57) contenant ladite liste, pour un fichier respectif, sur l'imprimante (16-2)
-- comparer la liste se trouvant sur une page de garde (50) d'un fichier respectif, lu par voie optique par le lecteur optique (16-1) avec la liste (54) actuellement stockée de ce fichier et détecter toute différence existant dans les indices de présence de ces deux listes ;
-- lorsqu'une différence détectée comporte un indice de présence supplémentaire, rectifier automatiquement le fichier en plaçant un document lu également par voie optique dans le fichier correspondant à l'entrée de la liste relative à l'indice de présence supplémentaire, et mettre la liste (57) à jour.

2. Système selon la revendication 1, dans lequel ledit module de gestion de fichiers (18) est en outre conçu pour détecter la manipulation de ladite liste (34) affichée sur un écran de poste de travail et autoriser l'importation ou l'effacement d'un document, en fonction d'une manipulation détectée.

3. Système selon la revendication 1, dans lequel ledit module de gestion de fichiers (18) est conçu pour maintenir des métadonnées pour chaque fichier, lesdites métadonnées contenant un identificateur de fichier et l'une quelconque des informations relatives à l'instant de création, à l'entité de création, à l'entité propriétaire et à l'entité de gestion actuelle, une entité étant une personne ou un département.

4. Système selon la revendication 3, dans lequel ledit module de gestion de fichiers (18) est conçu pour autoriser le transfert de la propriété et/ou du traitement d'un fichier d'une entité à une autre entité.

5. Système selon la revendication 1, dans lequel ledit module de gestion de fichiers (18) est conçu pour restreindre la rectification d'un fichier à un groupe présélectionné de personnes ou de départements, mais dans lequel l'examen du fichier est accessible à d'autres personnes ou départements présélectionnés en dehors dudit groupe présélectionné.

6. Système selon la revendication 1, dans lequel ledit module de gestion de fichiers (18) est conçu pour, lorsqu'une entité de traitement entre un document dans un fichier particulier, imprimer de façon permanente un identificateur de ladite entité de traitement sur ledit document.

7. Système selon la revendication 1, dans lequel ledit module de gestion de fichiers (18) est conçu pour, après achèvement d'un fichier, signaler un utilisateur en conséquence et/ou archiver le fichier en question, tout en supprimant par ce moyen l'apparition ultérieure d'un tel fichier dans une liste de fichiers en cours.

8. Système selon la revendication 1, dans lequel ledit module de gestion de fichiers (18) est conçu pour analyser automatiquement les diverses spécificités des flux de travail actuels impliquant les types de fichiers respectifs et proposer automatiquement des étapes de traitement en fonction de ladite analyse.
